# FASCICULE DE BREVET EUROPEEN

(11) **EP 0 827 681 B1**
(45) Date de publication et mention de la délivrance du brevet: **08.11.2000**
(21) Numéro de dépôt: 97401886.3
(22) Date de dépôt: 05.08.1997
(51) Int. Cl.: A01C 3/02, E04H 4/10

(54) **Dispositif de couverture en toile polyester destiné à couvrir les fosses à lisier**
Abdeckvorrichtung aus Polyesterfolie für Güllebecken
Cover system in polyester sheeting for covering liquid manure cisterns

(30) Priorité: 07.08.1996 FR 9610099
(43) Date de publication de la demande: 11.03.1998
(73) Titulaire: Rivoal, Jacques, 44600 Saint Nazaire (FR); Richard, Jacques, 44440 Teille (FR)
(72) Inventeur: Rivoal, Jacques, 44600 Saint Nazaire (FR); Richard, Jacques, 44440 Teille (FR)

(56) Documents cités:
- AU-A- 7 088 881
- DE-U- 29 606 913
- US-A- 3 579 657
- US-A- 4 393 528

## Description

La présente invention concerne un dispositif convenant à couvrir les fosses à lisier, du type sans structure de charpente interne, qui comprend une couverture en tissu polyester précontraint, enduit de polychlorure de vinyle (PVC), tendue à une certaine hauteur au dessus de la fosse, à l'intérieur d'une cerce ou d'un cadre métallique, qui est solidaire du bord extérieur de la fosse, une bavette de recouvrement est soudée à la périphérie de la couverture pour enserrer la partie externe du bord de fosse, et pour donner à l'ensemble une certaine étanchéité.

Les fosses à lisier, utilisées par les agriculteurs, présentent le plus souvent l'inconvénient d'être ouvertes à l'air libre, et de répandre autour de leur environnement une odeur nauséabonde, d'autre part, lorsqu'il pleut, ces fosses s'emplissent rapidement d'eau de pluie, ce qui a pour effet de les saturer en eau, et d'empêcher le lisier de fermenter, tout en réduisant son volume de stockage dans la fosse.

Le brevet américain US-A 4 393 528 décrit un dispositif servant à couvrir une piscine qui est amovible, et qui comprend une couverture en tissu de nylon, tendue par un sandow à l'intérieur d'une cerce, ladite couverture comportant un joint torique déformable qui vient en appui sur la partie plane située autour de la piscine, et qui permet d'obtenir l'étanchéité de la piscine lorsque la couverture est rabattue.

Dans ce brevet, l'effet du sandow enlaçant la couverture à la cerce permet de donner à la couverture une certaine tension, qui se répercute en une pression du joint torique déformable sur la partie plane située autour de la piscine, lorsque la couverture est rabattue.

Cependant, ce type de couverture ne pourrait être efficacement utilisé pour couvrir une fosse à lisier qui comporte un bord de fosse non strictement circulaire et qui est irrégulier sur son champ, ce qui empêcherait toute utilisation d'une couverture tendue avec un joint déformable en appui sur le champ du bord de fosse, pour donner à l'ensemble une certaine étanchéité.

La présente invention propose un dispositif de couverture pour fosse à lisier, sans structure de charpente interne, qui comporte une cerce ou un cadre métallique à l'intérieur de laquelle ou duquel est suspendue une couverture en tissu enduit de PVC, enlacée sur la cerce ou le cadre par un sandow et par une drisse, ladite couverture comprenant une bavette soudée à sa périphérie de façon perpendiculaire, pour enserrer le bord de la fosse et pour donner à l'ensemble une certaine étanchéité.

La présente invention évite les désagréments d'un montage à l'intérieur de la fosse, lorsque celle-ci est remplie de lisier, ainsi que le contact de tous matériaux inhérents à sa structure rigide (qui ne pourrait être réalisé qu'en acier inoxydable, et donc de façon onéreuse), avec les émanations acides et gazeuses qui se dégagent de la fosse.

Le dispositif, objet de l'invention, comprend une couverture en tissu polyester précontraint, enduit de PVC, qui est tendue par un sandow et par une drisse, enlacés parallèlement, à l'intérieur d'une cerce ou d'un cadre métallique, selon le type de fosse à couvrir.

Cette cerce ou ce cadre métallique est solidaire de poteaux de soutènement métalliques, qui sont fixés sur le flanc extérieur du bord de la fosse, et qui maintiennent celle-ci ou celui-ci, à une hauteur suffisante, pour que la flexion concave de la couverture, produite par sa masse, n'atteigne pas le lisier.

La couverture qui est d'un type en tissu polyester précontraint enduit de PVC, extrêmement résistant, est composée de segments qui sont assemblés entre eux par soudure à haute fréquence ; à sa périphérie, un jonc de renfort cylindrique est enserré par recouvrement et par soudage d'un pli, de façon à lui donner des moyens de préhension, d'une certaine résistance.

De façon classique, des oeillets sont régulièrement répartis en retrait du jonc, et sertis dans le pli, pour le passage du sandow et de la drisse.

Une bavette de recouvrement est soudée de façon perpendiculaire, à la périphérie de la couverture, et en retrait des oeillets, de façon à enserrer le bord de la fosse, et à donner à l'ensemble une certaine étanchéité.

Au centre de la partie concave de la couverture, et selon le type de fosse à couvrir, un orifice d'évacuation des eaux de pluie a été disposé, avec une canalisation d'écoulement débouchant à l'extérieur de la fosse, dans le mode de réalisation de l'invention qui comprend une cerce métallique.

De la même façon, un réservoir des eaux de pluie a été aménagé, avec un système automatique de pompage et d'évacuation desdites eaux, par canalisation à l'extérieur de la fosse, pour le mode de réalisation qui comprend un cadre rectangulaire ou carré.

Pour la réalisation de dispositifs présentant des dimensions importantes, on a prévu de placer des sacs de lest, à des endroits réguliers sur la partie concave de la couverture, afin d'éviter le balancement de celle-ci, lorsque le vent souffle avec une force relative.

L'utilisation du dispositif n'est pas limitative aux fosses à lisier, de façon avantageuse, et pour raisons de simplicité de mise en oeuvre, de résistance aux intempéries et de facilité de montage, il pourra également être utilisé pour couvrir les bassins de décantation des eaux usées, dans les stations d'épuration.

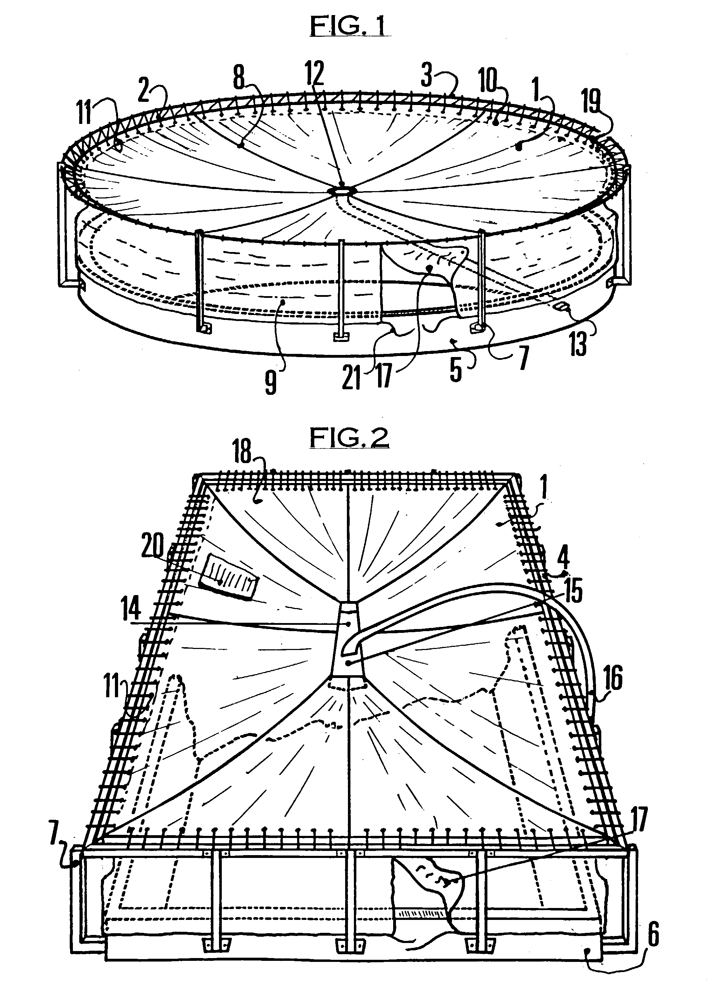

L'invention sera mieux comprise à l'aide de la description et des dessins annexés, dans lesquels :
■ la figure 1 représente un premier mode de réalisation de l'invention avec une cerce métallique supportant une couverture, de forme circulaire,
■ la figure 2 représente un second mode de réalisation avec un cadre métallique supportant une couverture de forme rectangulaire ou carrée.

Selon l'invention, le dispositif comprend une couverture en polyester précontraint enduit de PVC (1), qui est tendue par un sandow et par une drisse, enlacés parallèlement (2), à l'intérieur d'une cerce (3) ou d'un cadre (4) métallique, selon le type de fosse à couvrir (5), (6).

La cerce (3) ou le cadre (4) métallique est solidaire de poteaux de soutènement (7) qui sont fixés sur le flanc extérieur du bord de la fosse (5), (6), et qui maintiennent ladite cerce ou ledit cadre, à une hauteur suffisante, pour que la flexion concave (8) de la couverture (1), produite par sa masse, n'atteigne pas le lisier.

La couverture en tissu polyester précontraint enduit de PVC (1), qui est d'un type extrêmement résistant, est composée de segments (18), qui sont assemblés entre eux par soudure à haute fréquence ; un jonc de renfort cylindrique (19) est enserré par recouvrement et par soudage d'un pli, à sa périphérie, de façon à lui donner des moyens de préhension, d'une certaine résistance.

Des oeillets (11) sont régulièrement répartis en retrait du jonc (19), et sertis dans le pli, pour permettre le passage du sandow et de la drisse (2).

Une bavette de recouvrement (9) est soudée est à la couverture, de façon perpendiculaire à sa périphérie (10), en retrait des oeillets (11), de façon à enserrer le bord de la fosse avec un câble (21) par laçage, pour donner à l'ensemble une certaine étanchéité.

Dans le mode de réalisation de l'invention qui comprend une cerce métallique, un orifice d'évacuation des eaux de pluie (12) est disposé au centre de la partie concave de la couverture (1), avec une canalisation d'écoulement (13) à l'extérieur de la fosse.

De la même façon, dans le mode de réalisation qui comprend un cadre rectangulaire ou carré (4), un réservoir des eaux de pluie (14) a été aménagé au centre de la partie concave de la couverture (1), avec un système automatique de pompage (15) et d'évacuation des eaux, par une canalisation (16) extérieure à la fosse.

Des ouvertures (17) (20) sont aménagées dans la couverture (1) et dans la bavette de recouvrement (9), afin de permettre un accès à la fosse et le retrait du lisier.

La présente invention trouve principalement son application dans la couverture des fosses à lisier, des bassins de décantation des eaux usées, et dans l'industrie.

## Revendications

1. Dispositif convenant à couvrir les fosses à lisier, du type sans structure de charpente interne, comprenant une couverture en tissu polyester précontraint enduit de PVC (1), tendue par un sandow et par une drisse, enlacés parallèlement (2), à l'intérieur d'une cerce (3) ou d'un cadre métallique (4), selon le type de fosse à couvrir (5), (6), extérieur à la fosse, et soutenu à une certaine hauteur du bord extérieur de celle-ci, par des poteaux de soutènement (7), solidaires dudit bord, caractérisé en ce qu'une qu'une bavette de recouvrement (9) est soudée à la périphérie (10) de la couverture en tissu polyester précontraint enduit de PVC (1), de façon perpendiculaire, et en retrait des oeillets (11), pour enserrer le bord de la fosse (5), (6) avec un câble (21) par laçage, pour donner à l'ensemble, une certaine étanchéité.

2. Dispositif selon la revendication 1, caractérisé en ce que la cerce (3) ou le cadre (4) métallique est soutenu par des poteaux de soutènement (7), à une hauteur suffisante pour que la flexion concave de la couverture en tissu polyester précontraint enduit de PVC (1), produite par sa masse, n'atteigne pas le lisier.

3. Dispositif selon la revendication 1, caractérisé en ce que la couverture en tissu polyester précontraint enduit de PVC (1), de forme concave, comprend en son centre des moyens d'évacuation des eaux de pluie (12), (13), (14), (15), (16) appropriés, selon le type de fosse à lisier (5), (6).

4. Dispositif selon la revendication 1, caractérisé en ce que la périphérie de la couverture en tissu polyester précontraint enduit de PVC (1), est renforcée d'un jonc cylindrique (19), qui est enserré par recouvrement et par soudage d'un pli, sur lequel des oeillets (11) sont sertis, afin de renforcer les moyens de préhension de ladite couverture, à l'intérieur de la cerce (3) ou du cadre (4) métallique, par le sandow et par la drisse (2) dont elle est solidaire.

## Patentansprüche

1. Vorrichtung zum Abdecken von Güllegruben des Typs ohne innere Tragstruktur einschließlich einer Abdeckung aus vorgespanntem Polyester, überzogen mit PVC (1), die von einem Gummiseil und einem Seil, die parallel verlaufen (2) innerhalb eines runden (3) oder eckigen (4) Metallrahmens (4), je nach Typ der abzudeckenden Grube (5), (6) und von Haltestangen, die mit dem Rand der Grube verbunden sind, am äußeren Rand der Grube in einer bestimmten Höhe über der Grube gehalten wird. Diese ist dadurch gekennzeichnet, dass eine Abdecklippe (9) vertikal und jenseits der Ösen (11) für das Umfassen des Grubenrandes (5), (6) mit einem Halteseil (21) an den Rand (10) der Abdeckung geschweißt ist, was dem ganzen eine gewisse Dichte verleiht.

2. Vorrichtung gemäß Anmeldung 1, dadurch gekennzeichnet, daß der runde (3) oder eckige (4) Metallrahmen von Haltestangen (7) auf einer genügenden Höhe gehalten wird, damit die konkave Biegung der Abdeckung aus vorgespanntem Polyestermaterial, das mit PVC (1) bezogen ist, die von ihrem Gewicht hervorgerufen wird, nicht die Gülle erreicht.

3. Vorrichtung gemäß Anmeldung 1, dadurch gekennzeichnet, dass die Abdeckung aus vorgespanntem Polyestermaterial, die mit PVC (1) überzogen ist und eine konkave Form besitzt, in der Mitte geeignete Vorrichtungen zur Ableitung von Regenwasser (12), (13), (14), (15), (16), je nach Typ der Güllegrube (5), (6) besitzt.

4. Vorrichtung gemäß Anmeldung 1, dadurch gekennzeichnet, dass der Rand der Abdeckung aus vorgespanntem Polyestermaterial, das mit PVC (1) überzogen ist, mit einer zylindrischen Stange (19) verstärkt ist, die mit Hilfe einer Falte und des Verschweißens eingelassen ist, auf der sich Ösen (11) befinden, damit das Greifen der genannten Abdeckung innerhalb des runden (3) oder eckigen (4) Metallrahmens mit Hilfe des Gummiseils oder Seils (2) mit denen sie verbunden ist, verbessert wird.

## Claims

1. Device designed to cover liquid manure retention pits constructed without internal framework structure, consisting of a pre-stressed PVC coated polyester fabric cover (1) stretched above the pit by means of a rubber extensible spring or halyard, laced in parallel inside a hoop (3) or metal frame (4) depending on the type of pit to be covered (5), (6), the said hoop or metal frame being external to the pit; cover held at a certain height above the pit by supporting posts made integral with pit edge, characterized by a covering skirt (9) welded at the periphery (10) of the pre-stressed PVC coated polyester fabric cover (1) perpendicularly and inwards the eyelets (11) to wrap the external edge of pit wall (5) (6), by a laced cable to confer a certain tightness to the assembly.

2. Device as per patent claim 1 characterized by the fact that the metal hoop (3) or frame (4) is supported by posts (7) at a height sufficient so that the sag of the pre-stressed PVC coated polyester fabric cover (1), induced by cover own weight, will prevent the latter from getting in contact with the liquid manure.

3. Device as per patent claim 1 characterized by the fact that the pre-stressed PVC coated polyester fabric cover (1), of concave shape, is provided, in its center part, with suitable drain water discharge arrangements (12), (13), (14), (15), (16), depending on the type of manure pit (5), (6).

4. Device as per patent claim 1 characterized by the fact that the periphery of the pre-stressed PVC coated polyester fabric cover (1), is reinforced by a cylindrical bead (19) held by overlapping and welding in a fold, on which eyelets (11) are crimped to reinforce cover attachment in the metal hoop (3) or frame (4) by means of the extensible spring or halyard (2) made integral to the cover.
